# EUROPÄISCHE PATENTSCHRIFT

(11) **EP 2 465 835 B1**
(45) Veröffentlichungstag und Bekanntmachung des Hinweises auf die Patenterteilung: **18.09.2013**
(21) Anmeldenummer: 10195571.4
(22) Anmeldetag: 17.12.2010
(51) Int. Cl.: C04B 22/00, C04B 40/06, B28C 5/00, B28C 7/00

(54) **VERFAHREN ZUR KONTINUIERLICHEN HERSTELLUNG VON MÖRTELMASSEN**
Method for continuous production of mortar compositions
Procédé de fabrication continue de masses de mortier

(43) Veröffentlichungstag der Anmeldung: 20.06.2012
(73) Patentinhaber: BASF Construction Polymers GmbH, 83308 Trostberg (DE)
(72) Erfinder: Schinabeck, Michael, 83352, Altenmarkt (DE); Trieflinger, Christian, 84508, Burgkirchen (DE); Hesse, Christoph, 83308, Trostberg (DE)

(56) Entgegenhaltungen:
- EP-A2- 0 144 965
- EP-A2- 0 357 929
- WO-A1-02/070425
- WO-A1-2009/052997
- WO-A1-2010/026155
- GB-A- 2 459 105
- US-A- 5 709 743

## Beschreibung

Die vorliegende Erfindung betrifft ein Verfahren zur Herstellung einer hydraulisch abbindenden, Wasser und hydraulisches Bindemittel enthaltenden Zusammensetzung, wobei das Verfahren dadurch gekennzeichnet ist, dass in einem kontinuierlichen Mischverfahren unter Einsatz eines Mischelements Calcium Silikat Hydrat enthaltende, wässrige Erhärtungsbeschleuniger-Zusammensetzung und Anmachwasser zu einer Trockenmörtelmischung zugegeben wird und die nach der Norm EN 1961-3 bestimmte Verarbeitungszeit der hydraulisch abbindenden Zusammensetzung größer als 10 Minuten ist, bevorzugt größer als 15 Minuten.

In "R. Bayer, H. Lutz, Dry Mortars, Ullmann' s Encyclopedia of Industrial Chemistry, 6th ed., vol. 11, Wiley-VCH, Weinheim, (2003), 83-108" wird ein Überblick über die Anwendungen und Zusammensetzung von Trockenmörteln, wie Binder, Aggregate und verschiedene Zusätze gegeben. Insbesondere sind durch Zusätze wie redispergierbare Polymerpulver und/oder Celluloseether, polymervergütete zementäre Trockenmischungen gebräuchlich.

Häufig wird auf der Baustelle eine maschinelle Herstellung von Mörteln aus Trockenmörteln durchgeführt, insbesondere kontinuierliche Verfahren sind aufgrund ihrer relativen einfachen Bedienbarkeit und Effizienz, besonders bei mittleren und größeren Bauvorhaben, vorteilhaft. Bei der maschinellen Zudosierung von Wasser wird das Trockenmörtelgemisch aus einem Silo, Minitainer oder aus Säcken in ein Mischelement überführt und dort mit Wasser angemischt. Anschließend erfolgt das Pumpen des so entstandenen hydraulisch abbindenden Mörtels zur eigentlichen Applikation oder der Mörtel wird in einen Vorratsbehälter zur weiteren Verwendung abgefüllt. Im Stand der Technik sind kontinuierliche Mischverfahren zur Herstellung von Mörteln bekannt, wobei üblicherweise ein (Durchlauf)mischer zum Einsatz kommt, zu welchem Anmachwasser und Trockenmörtel zugeführt werden und die Homogenisierung dieser Mischung unter Einsatz eines Mischelements erfolgt. Beispielsweise beschreibt die Offenlegungsschrift DE 199 08 732 A1 einen horizontalen Durchlaufmischer für Mörtel, bei dem ein Wasserzulass vorgesehen ist und die Mischung von Trockenmörtel und Wasser in einem Stahlrohr durch eine Mischwelle erfolgt. Die Offenlegungsschrift EP 1 914 056 A2 offenbart ebenfalls einen kontinuierlichen Mischer mit einem Mischbehälter und entsprechenden Zuführungen für Wasser und Trockenmörtel. Die Durchmischung erfolgt in einer Mischkammer durch eine Mischerwelle.

US 5 709 743 beschreibt Abbinde-und Erhärtungsbeschleuniger für silikatische hydraulische Binder (bspw. (Portland) Zement enthaltende Bindemittel wie Mörtel und Beton), welche erhalten wurden bei gewöhnlichen Druck- und Temperaturbedingungen und Zerkleinerung einer wässrigen Suspension des silikatischen hydraulischen Bindemittels. Die Abbinde-und Erhärtungsbeschleuniger sollen ausreichend fein sein, um einen Sedimentationstest zu bestehen, bei welchem unter gegebenen Bedingungen (10 g des Beschleunigungsmittels in 100 ml Wasser) eine Sedimentationsrückstandshöhe von mindestens 50 % der ursprünglichen Höhe nach zwei Tagen erreicht werden muss. Der Trockenextrakt des Beschleunigungsmittels liegt zwischen 5 und 55 Gew. %. Als silikatisch hydraulisches Bindemittel kann beispielsweise Portland Zement verwendet werden, welcher entsprechend vermahlen wird.

Beim Einsatz von Mörteln im Außenbereich, stellt sich das Problem, dass insbesondere bei niedrigen Temperaturen die Abbindezeit und Frühfestigkeiten der Mörtel nicht zufriedenstellend sind. Übliche Abbindebeschleuniger wie beispielsweise Calciumformiat, Calciumchlorid und Calciumnitrat sind zwar in Pulverform in Trockenmörtelmischungen einsetzbar, allerdings vermögen diese dem Problem der nicht zufriedenstellenden Abbindezeiten und Frühfestigkeiten nur in unzureichendem Maße Abhilfe zu verschaffen. Insbesondere ist ein negativer Einfluss auf die Festigkeiten nach 28 Tagen zu verzeichnen. Oben genannte Beschleuniger in Anwendung mit Trockenmörtelsystemen sind beispielsweise in der Veröffentlichungsschrift WO 2008/151878 A1 beschrieben. Die Offenlegungsschrift WO 2010/026155 A1 offenbart weiter verbesserte Erhärtungsbeschleuniger auf Basis wässriger Suspensionen von Calcium Silikat Hydrat, welche sehr wirksam sind. Allerdings sind die genannten Suspensionen aufgrund ihres relativ hohen Wassergehalts wegen des vorzeitig einsetzenden hydraulischen Abbindens der Bindemittelkomponente(n) prinzipiell nicht als Formulierungskomponente in Trockenmörtelmischungen einsetzbar.

Durch die jahreszeitlich bedingten relativ starken Temperaturschwankungen sind die Trockenmörtelmischungen meist nicht das ganze Jahr in unveränderter Form einsetzbar, insbesondere ist das Abbindeverhalten relativ stark temperaturabhängig. Die Trockenmörtelindustrie ist sehr daran interessiert mit einer einzigen Trockenmörtelmischung das ganze Jahr über arbeiten zu können und will insbesondere vermeiden, dass zweimal im Jahr (im Frühjahr und Herbst) jeweils die Trockenmörtelformulierungen auf die jeweilige Jahreszeit umgestellt werden müssen (insbesondere Anpassung des Erhärtungsbeschleunigergehalts). Dies erfordert einen entsprechend hohen logistischen Aufwand und ist mit einem beträchtlichen Mehraufwand an Arbeit und Kosten verbunden. Beispielsweise treten Probleme auf, wie man mit Restbeständen in den Silos und sonstigen Behältern umgeht. Das Leeren entsprechender Behälter ist auch aufwändig.

Aufgabe der vorliegenden Erfindung war es also ein wirtschaftliches Verfahren zur Herstellung von hydraulisch abbindenden Zusammensetzungen, insbesondere Mörteln mit verbesserten Abbindezeiten, Frühfestigkeiten und Endfestigkeiten nach 28 Tagen anzugeben. Dabei soll ausreichend offene Zeit zur Verarbeitung der Mörtel zur Verfügung stehen. Insbesondere soll es mit diesem Verfahren möglich sein das ganze Jahr über in flexibler Weise bei verschiedenen Temperaturverhältnissen, besonders auch bei tiefen Temperaturen (unter 10 °C) mit nur einer Trockenmörtelmischung zu arbeiten.

Die vorstehend genannte Aufgabe wird gelöst durch ein Verfahren zur Herstellung einer hydraulisch abbindenden, Wasser und hydraulisches Bindemittel enthaltenden Zusammensetzung, wobei das Verfahren dadurch gekennzeichnet ist, dass in einem kontinuierlichen Mischverfahren unter Einsatz eines Mischelements Calcium Silikat Hydrat enthaltende, wässrige Erhärtungsbeschleuniger-Zusammensetzung gemäß Anspruch 1 und Anmachwasser zu einer Trockenmörtelmischung zugegeben wird und die nach der Norm EN 1961-3 bestimmte Verarbeitungszeit der hydraulisch abbindenden Zusammensetzung größer als 10 Minuten ist, bevorzugt größer als 15 Minuten.

In dem erfindungsgemäßen Verfahren kommen Trockenmörtelmischungen zum Einsatz, deren bevorzugte Zusammensetzungen im Folgenden beschrieben werden sollen.

Das hydraulische Bindemittel enthält meist Zement oder besteht aus Zement. Bevorzugt ist das hydraulische Bindemittel im Trockenmörtel enthalten. Das hydraulische Bindemittel unterliegt bezüglich der Art des Zements keinen besonderen Beschränkungen. Es können Portlandzemente, insbesondere ausgewählt aus der Gruppe CEM I, II, III, IV und V und/oder Tonerdezemente (Aluminatzemente) zur Verwendung kommen. Weißzement ist besonders in den Fällen geeignet in denen eine entsprechende Farbgebung der Produkte eine Rolle spielt. Die genannten Zemente können einzeln oder als Mischungen eingesetzt werden. Der Gewichtsanteil des zementären hydraulischen Bindemittels in der Trockenmörtelmischung beträgt je nach Anwendung von 10 bis 95 Gew.-%, bevorzugt ist ein Gewichtsanteil von 20 bis 80 Gew.-%, besonders bevorzugt von 30 bis 50 Gew.-%. In einer weiteren Ausführungsform können optional zusätzlich zu den genannten Zementen auch puzzolanische und/oder latent hydraulische Bindemittel in der Trockenmörtelmischung enthalten sein. Bei den puzzolanisch und/oder latent hydraulischen Zusätzen werden vorzugsweise Flugasche, Mikrosilika, Metakaolin, Trassmehl, Alumosilikat, Tuff, Phonolith, Diatomeenerde, amorph gefälltes Silica, Ölschiefer sowie Hochofenschlacke mit haupsächlich nicht kristallinen Anteilen eingesetzt. Ihr Anteil in der Trockenmörtelmischung beträgt gegebenenfalls von 1 bis 30 Gew.-%, bevorzugt sind sie bezogen auf den Zement von 5 bis 30 Gew.-% enthalten.

Bevorzugt sind auch Füllstoffe in den Trockenmörtelmischungen enthalten. Diese sind in den wässrigen Systemen nur in geringem Maße löslich, bzw. quellbar. Sie wirken insbesondere nicht als ein Bindemittel. Geeignete anorganische Füllstoffe sind zum Beispiel Quarzsand, Kalksteinmehl, Kreide, Marmor, Ton, Mergel, Aluminiumoxid, Talkum und/oder Schwerspat, wobei Quarzsand und Kalksteinmehl bevorzugt sind. Die anorganischen Füllstoffe können bevorzugt auch als Leichtfüllstoffe wie Mikrohohlkugeln aus Glas, wie Blähglas und als Alumosilikate, wie Perlithe und Blähton vorliegen. Leichtfüllstoffe auf natürlicher Basis wie zum Beispiel Mineralschaum, Bims, Schaumlava und/oder Bläh-Vermiculit sind ebenfalls bevorzugt. Erfindungsgemässe organische Füllstoffe sind beispielsweise geschredderte Plastikabfälle, wie zum Beispiel aus Polyvinylchlorid, Polystyrol, Polyethylen, Polypropylen oder Melaminharzen. Gummipartikel und/oder Styroporkugeln stellen bevorzugte erfindungsgemäße organische Füllstoffe dar. Die Füllstoffe sind in der Trockenmischung von 5 bis 75 Gew.-%, bevorzugt von 10 bis 60 Gew.-%, besonders bevorzugt von 30 bis 50 Gew.-% enthalten.

Bevorzugt enthalten die Trockenmörtelmischungen Wasserretentionsmittel auf Basis Polysaccharidderivate. Als Polysaccharidderivat sind Celluloseether bevorzugt, beispielsweise Alkylcellulosen wie Methylzellulose, Ethylzellulose, Propylzellulose und Methylethylzellulose, Hydroxyalkylzellulosen wie Hydroxyethylzellulose (HEC), Hydroxypropylzellulose (HPC) und Hydroxyethylhydroxypropylzellulose, Alkylhydroxyalkylzellulosen wie Methylhydroxyethylzelluose (MHEC), Methylhydroxypropylzelluose (MHPC) und Propylhydroxypropylzellulose. Bevorzugt sind die Zelluloseetherderivate Methylzellulose (MC), Hydroxypropylzellulose (HPC), Hydroxyethylzellulose (HEC) und Ethylhydroxyethylzellulose (EHEC), und besonders bevorzugt sind Methylhydroxyethylzelluose (MHEC) und Methylhydroxypropylzelluose (MHPC). Die obigen Zelluloseetherderivate, die jeweils durch entsprechende Alkylierung und Alkoxylierung von Zellulose erhältlich sind, liegen vorzugsweise als nichtionische Strukturen vor, aber es wäre auch möglich, beispielsweise Carboxymethylzellulose (CMC) zu verwenden. Bevorzugt ist außerdem die Verwendung von nichtionischen Stärkeetherderivaten wie Hydroxypropylstärke, Hydroxyethylstärke und Methylhydroxypropylstärke. Bevorzugt ist Hydroxypropylstärke. Bevorzugt sind auch mikrobiell hergestellte Polysaccharide wie Welan Gum und/oder Xanthane und natürlich vorkommende Polysaccharide wie Alginate, Carrageenane und Galactomannane. Diese können aus entsprechenden Naturprodukten durch extraktive Verfahren gewonnen werden, wie beispielsweise im Fall von Alginaten und Carrageenanen aus Algen, im Fall von Galactomannanen aus Johannesbrotbaumkernen.

In der Trockenmörtelmischung liegen die auf Polysaccharidstrukturen basierenden Wasserrententionsmittel bezogen auf die Trockenmörtelmischung von 0,1 bis 1,5 Gew.-% vor, bevorzugt von 0,2 bis 1,2 Gew.-%, besonders bevorzugt von 0,3 bis 1,0 Gew.-% vor.

Die Trockenmörtelmischungen können auch optional Abbindebeschleuniger, bevorzugt in Pulverform enthalten. Geeignete Abbindebeschleuniger sind die wasserlöslichen Calciumsalze Calciumformiat, Calciumchlorid und/oder Calciumnitrat. Auch auf Calcium Silikat Hydrat basierende Beschleuniger, bevorzugt in Pulverform, sind denkbar. Bevorzugt ist Calciumformiat. Die Abbindebeschleuniger werden vorzugsweise mit einem Anteil von 0,3 bis 4,0 Gew.-%, bevorzugt von 0,5 bis 3,0 Gew.-%, besonders bevorzugt von 0,8 bis 2,5 Gew.-% bezogen auf die Trockenmischung eingesetzt. Sie dienen sowohl zur weiteren Verkürzung der Abbindezeiten als auch zur Steigerung der Frühfestigkeiten der Baustoffprodukte.

In dem erfindungsgemäßen Verfahren ist das kontinuierliche Mischverfahren unter Einsatz eines Mischelements nicht besonders beschränkt. Es können alle marktüblichen Mischsysteme (Putzmaschinen, Mörtelpumpen etc.) zur Herstellung von hydraulisch abbindenden Zusammensetzungen, bevorzugt von Putzen, zur Verwendung kommen. Auch die zur Verwendung kommenden Mischelemente sind nicht besonders beschränkt. Alle marktüblichen Mischelemente wie zum Beispiel Durchlaufmischer, Zwangsmischer oder Mörtelpumpen können zum Einsatz kommen. Es können beispielsweise, wie in der DE 199 08 732 A1 offenbart, Durchlaufmischer für Mörtel, bei dem ein Wasserzulass vorgesehen ist und die Mischung von Trockenmörtel und Anmachwasser in einem Stahlrohr durch eine Mischwelle erfolgt, verwendet werden. Auch die Mischanlagen der EP 914 056 A2 sind geeignet.

Die Calcium Silikat Hydrat enthaltenden, wässrigen Erhärtungsbeschleuniger-Zusammensetzungen sind in der WO 2010/026155 A1 beschrieben und sind nach einem der dort offenbarten Verfahren erhältlich, insbesondere nach einem Verfahren gemäß der unabhängigen Ansprüche 1 oder 15.

Bevorzugt wird die Erhärtungsbeschleuniger-Zusammensetzung erhalten durch Umsetzung einer wasserlöslichen Kalziumverbindung mit einer wasserlöslichen Silikatverbindung, wobei die Umsetzung der wasserlöslichen Kalziumverbindungen mit der wasserlöslichen Silikatverbindung in Anwesenheit einer wässrigen Lösung erfolgt, welche ein wasserlösliches, sich als Fließmittel für hydraulische Bindemittel eignendes Kammpolymer enthält.

Bevorzugt sind Erhärtungsbeschleuniger-Zusammensetzungen deren Komponenten bei der Herstellung gemäß der Lehre der WO 2010/026155 A1 in folgenden Mengenverhältnissen eingesetzt wurden:
i) 0,01 bis 75, bevorzugt 0,01 bis 55 Gew.-%, mehr bevorzugt 0,01 bis 15 Gew.-% der wasserlöslichen Kalzium-Verbindung,
ii) 0.01 bis 75, bevorzugt 0,01 bis 55 Gew.-%, mehr bevorzugt 0,01 bis 10 Gew.-% der wasserlöslichen Silikatverbindung,
iii) 0,001 bis 60, bevorzugt 0,1 bis 30 Gew.-%, mehr bevorzugt 0,1 bis 10 Gew.-% des wasserlöslichen Kammpolymers,
iv) 24 bis 99, bevorzugt 50 bis 99 Gew.-%, mehr bevorzugt 70 bis 99 Gew.-% an Wasser.

Die Calcium Silikat Hydrat enthaltenden, wässrigen Erhärtungsbeschleuniger-Zusammensetzungen werden gemäß der WO 2010/026155 A1 bevorzugt hergestellt unter Einsatz wasserlöslicher Kalziumverbindungen wie Kalziumchlorid, Kalziumnitrat, Kalziumformiat, Kalziumacetat, Kalziumbicarbonat, Kalziumbromid, Kalziumcarbonat, Kalziumcitrat, Kalziumchlorat, Kalziumfluorid, Kalziumgluconat, Kalziumhydroxid, Kalziumhypochlorid, Kalziumiodat, Kalziumiodid, Kalziumlactat, Kalziumnitrit, Kalziumoxalat, Kalziumphosphat, Kalziumpropionat, Kalziumsilikat, Kalziumstearat, Kalziumsulfat, Kalziumsulfat-Hemihydrat, Kalziumsulfat-Dihydrat, Kalziumsulfid, Kalziumtartrat, und/oder Kalziumaluminat, Trikalziumsilikat und/oder Dikalziumsilikat.

Die Calcium Silikat Hydrat enthaltenden, wässrigen Erhärtungsbeschleuniger-Zusammensetzungen werden gemäß der WO 2010/026155 A1 bevorzugt hergestellt unter Einsatz wasserlöslicher Silikatverbindungen wie Natriumsilikat, Kaliumsilikat, Wasserglas, Aluminiumsilikat, Trikalziumsilikat, Dikalziumsilikat, Kalziumsilikat, Kieselsäure, Natriummetasilikat und/oderKaliummetasilikat.

Die bei der Herstellung der Calcium Silikat enthaltenden, wässrigen Erhärtungsbeschleuniger-Zusammensetzungen bevorzugt verwendeten, sich als Fließmittel für hydraulische Bindemittel sich eignenden Kammpolymere, sind bevorzugt gemäß einem der Ansprüche 21 bis 25 der WO 2010/026155 A1 weiter definiert.

Unter dem Begriff Anmachwasser wird in der vorliegenden Erfindung das Wasser verstanden, welches zum Anmischen der erfindungsgemäßen Zusammensetzungen zum Einsatz kommt. Es ist nicht besonders beschränkt, insbesondere kann dabei Leitungswasser, Brunnenwasser, Oberflächenwasser oder sonstiges Wasser benutzt werden, welches üblicherweise in der Bauchemie als geeignet erachtet wird.

Die die nach der Norm EN 1961-3 bestimmte Verarbeitungszeit der hydraulisch abbindenden Zusammensetzung sollte bevorzugt größer als 10 Minuten sein, bevorzugt größer als 15 Minuten. Selbstverständlich können die genannten Verarbeitungszeiten auch geringer gewählt werden, allerdings wird dabei die für den Verarbeiter wichtige "Offene Zeit" um ein vernünftiges Platzieren der Zusammensetzungen zu gewährleisten sehr kurz. Dadurch können sich Probleme ergeben, wie zum Beispiel mangelnde Pumpbarkeit der Zusammensetzungen.

In einer bevorzugten Ausführungsform ist das Verfahren dadurch gekennzeichnet, dass das hydraulische Bindemittel Zement ist.

Bevorzugt ist, dass die wässrige Erhärtungsbeschleuniger-Zusammensetzung, welche Calcium Silikat Hydrat enthält mit dem Anmachwasser vermischt wird und in dieser Form der Trockenmörtelmischung zugesetzt wird.

In einer weiteren Ausführungsform ist bevorzugt, dass die wässrige Erhärtungsbeschleuniger-Zusammensetzung, welche Calcium Silikat Hydrat enthält, separat vom Anmachwasser zu der Trockenmörtelmischung zugegeben wird, bevorzugt über zwei separate Zuführungsleitungen für das Anmachwasser und die Erhärtungsbeschleuniger-Zusammensetzung.

Bevorzugt ist ein Verfahren, gekennzeichnet dadurch, dass das Mischelement eine Mörtelpumpe ist.

Bevorzugt ist ein Verfahren, gekennzeichnet dadurch, dass die wässrige Erhärtungsbeschleuniger-Zusammensetzung, welche Calcium Silikat Hydrat enthält, hergestellt wurde durch Umsetzung einer wasserlöslichen Kalziumverbindung mit einer wasserlöslichen Silikatverbindung, wobei die Umsetzung der wasserlöslichen Kalziumverbindungen mit der wasserlöslichen Silikatverbindung in Anwesenheit einer wässrigen Lösung erfolgt, welche ein wasserlösliches, sich als Fließmittel für hydraulische Bindemittel eignendes Kammpolymer enthält.

Bevorzugt ist, dass die Trockenmörtelmischung Füllstoffe, Fliessmittel, Schwundreduzierer, Luftporenbildner, Entschäumer und/oder auf Polysaccharidstrukturen basierende, bevorzugt wasserlösliche Wasserretentionsmittel enthält. Die vorstehend genannten Mittel sind nicht besonders beschränkt und dem Fachmann auf dem Gebiet der Trockenmörtel und auch der Betontechnologie bekannt. Als Fliessmittel eigenen sich insbesondere Polycarboxylatether, BNS, Melamin-Formaldehyd-Sulphonate (MFS), aber auch Lignosulphonate. Bezüglich der redispergierbare Polymerpulver und auf Polysaccharidstrukturen basierende, bevorzugt wasserlösliche Wasserretentionsmittel, wird auf die vorstehend genannten detaillierten Ausführungen im Zusammenhang mit Trockenmörteln hingewiesen.

Bevorzugt sind die erfindungsgemäßen Verfahren dadurch gekennzeichnet, dass weder ein alkalifreier Beschleuniger basierend auf Sulfat und Aluminiumsalzen, noch ein alkalihaltiger Beschleuniger in dem Verfahren zur Verwendung kommt. Die Verwendung dieser Beschleuniger führt im Allgemeinen zu sehr geringen Verarbeitungszeiten und schnellen Abbindezeiten, wie Sie bei alkalifreien Beschleunigern üblich sind.

Bevorzugt ist das Verfahren dadurch gekennzeichnet, dass die Dosierung des Calcium Silikat Hydrats bezogen auf das hydraulische Bindemittel, bevorzugt bezogen auf Zement, 0,05 Gew.-% bis 5 Gew.-%, bevorzugt 0.1 Gew.-% bis 1.5 Gew.-%, besonders bevorzugt 0.2 Gew.-% bis 1 Gew.-% beträgt.

Die Erfindung betrifft auch ein Verfahren zur Herstellung von hydraulisch abbindenden Reparaturmörteln, Armierungsklebern, mineralischen Putzen und Estrichsystemen, bevorzugt mineralischen Putzen.

## Patentansprüche

1. Verfahren zur Herstellung einer hydraulisch abbindenden, Wasser und hydraulisches Bindemittel enthaltenden Zusammensetzung, wobei das Verfahren **dadurch gekennzeichnet ist, dass** in einem kontinuierlichen Mischverfahren unter Einsatz eines Mischelements eine Calcium Silikat Hydrat enthaltende, wässrige Erhärtungsbeschleuniger-Zusammensetzung und Anmachwasser zu einer Trockenmörtelmischung zugegeben wird und die nach der Norm EN 1961-3 bestimmte Verarbeitungszeit der hydraulisch abbindenden Zusammensetzung größer als 10 Minuten ist, bevorzugt größer als 15 Minuten und wobei die Calcium Silikat Hydrat enthaltende, wässrige Erhärtungsbeschleuniger-Zusammensetzung hergestellt wurde durch Umsetzung einer wasserlöslichen Kalziumverbindung mit einer wasserlöslichen Silikatverbindung, wobei die Umsetzung der wasserlöslichen Kalziumverbindungen mit der wasserlöslichen Silikatverbindung in Anwesenheit einer wässrigen Lösung erfolgt, welche ein wasserlösliches, sich als Fließmittel für hydraulische Bindemittel eignendes Kammpolymer enthält.

2. Verfahren nach Anspruch 1, **gekennzeichnet dadurch, dass** das hydraulische Bindemittel Zement ist.

3. Verfahren nach Anspruch 1 oder 2, **gekennzeichnet dadurch, dass** die Calcium Silikat Hydrat enthaltende, wässrige Erhärtungsbeschleuniger-Zusammensetzung mit dem Anmachwasser vermischt wird und in dieser Form der Trockenmörtelmischung zugesetzt wird.

4. Verfahren nach Anspruch 1 oder 2, **gekennzeichnet dadurch, dass** die Calcium Silikat Hydrat enthaltende, wässrige Erhärtungsbeschleuniger-Zusammensetzung separat vom Anmachwasser zu der Trockenmörtelmischung zugegeben wird, bevorzugt über zwei separate Zuführungsleitungen für das Anmachwasser und die Erhärtungsbeschleuniger-Zusammensetzung.

5. Verfahren nach einem der Ansprüche 1 bis 4, **gekennzeichnet dadurch, dass** das Mischelement eine Mörtelpumpe ist.

6. Verfahren nach einem der Ansprüche 1 bis 5, **gekennzeichnet dadurch, dass** die Trockenmörtelmischung Füllstoffe, Fliessmittel, Schwundreduzierer, Luftporenbildner, Entschäumer und/oder auf Polysaccharidstrukturen basierende, bevorzugt wasserlösliche Wasserretentionsmittel enthält.

7. Verfahren nach einem der Ansprüche 1 bis 6, **dadurch gekennzeichnet, dass** weder ein alkalifreier Beschleuniger basierend auf Sulfat und Aluminiumsalzen, noch ein alkalihaltiger Beschleuniger in dem Verfahren zur Verwendung kommt.

8. Verfahren nach einem der Ansprüche 1 bis 7, **dadurch gekennzeichnet, dass** die Dosierung des Calcium Silikat Hydrats bezogen auf das hydraulische Bindemittel, bevorzugt bezogen auf Zement, 0,05 Gew.-% bis 5 Gew.-%, bevorzugt 0.1 Gew.-% bis 1.5 Gew.-%, besonders bevorzugt 0.2 Gew.-% bis 1 Gew.-% beträgt.

9. Verfahren nach einem der Ansprüche 1 bis 8 zur Herstellung von hydraulisch abbindenden Reparaturmörteln Armierungsklebern, mineralischen Putzen, und Estrichsystemen, bevorzugt mineralischen Putzen.

## Claims

1. Method for producing a hydraulically setting composition comprising water and hydraulic binder, the method being **characterized in that** in a continuous mixing process, using a mixing element, an aqueous hardening accelerator composition comprising calcium silicate hydrate, and batching water, are added to a dry mortar mixture and the processing life of the hydraulically setting composition as determined in accordance with standard EN 1961-3 is greater than 10 minutes, preferably greater than 15 minutes, the aqueous hardening accelerator composition comprising calcium silicate hydrate having been prepared by reaction of a water-soluble calcium compound with a water-soluble silicate compound, and the reaction of the water-soluble calcium compounds with the water-soluble silicate compound taking place in the presence of an aqueous solution which comprises a water-soluble comb polymer that is a suitable plasticizer for hydraulic binders.

2. Method according to Claim 1, **characterized in that** the hydraulic binder is cement.

3. Method according to Claim 1 or 2, **characterized in that** the aqueous hardening accelerator composition comprising calcium silicate hydrate is mixed with the batching water and is added in this form to the dry mortar mixture.

4. Method according to Claim 1 or 2, **characterized in that** the aqueous hardening accelerator composition comprising calcium silicate hydrate is added separately from the batching water to the dry mortar mixture, preferably via two separate feed lines for the batching water and for the hardening accelerator composition.

5. Method according to any of Claims 1 to 4, **characterized in that** the mixing element is a mortar pump.

6. Method according to any of Claims 1 to 5, **characterized in that** the dry mortar mixture comprises fillers, plasticizers, shrinkage reducers, air entrainers, defoamers and/or preferably water-soluble water retention agents based on polysaccharide structures.

7. Method according to any of Claims 1 to 6, **characterized in that** neither an alkali-metal-free accelerator based on sulphate and aluminium salts, nor an alkali-metal-containing accelerator, is used in the method.

8. Method according to any of Claims 1 to 7, **characterized in that** the level of addition of the calcium silicate hydrate, based on the hydraulic binder, preferably based on cement, is 0.05 wt% to 5 wt%, preferably 0.1 wt% to 1.5 wt%, more preferably 0.2 wt% to 1 wt%.

9. Method according to any of Claims 1 to 8 for producing hydraulically setting repair mortars, reinforcing adhesives, mineral renders, and screeding systems, preferably mineral renders.

## Revendications

1. Procédé pour la préparation d'une composition à prise hydraulique, contenant de l'eau et un liant hydraulique, le procédé étant **caractérisé en ce qu'**une composition aqueuse accélérant le durcissement, contenant du silicate de calcium hydraté et de l'eau de gâchage est ajoutée à un mélange de mortier sec dans un procédé de mélange continu en utilisant un organe de mélange et le temps de mise en ouvre, déterminé selon la norme EN 1961-3, de la composition à prise hydraulique étant supérieur à 10 minutes, de préférence supérieur à 15 minutes et la composition aqueuse, accélérant le durcissement, contenant du silicate de calcium hydraté ayant été préparé par transformation d'un composé du calcium, soluble dans l'eau, avec un composé de type silicate, soluble dans l'eau, la transformation des composés de calcium solubles dans l'eau avec le composé de type silicate soluble dans l'eau ayant lieu en présence d'une solution aqueuse, qui contient un polymère en peigne, soluble dans l'eau, approprié pour agent fluidifiant pour des liants hydrauliques.

2. Procédé selon la revendication 1, **caractérisé en ce que** le liant hydraulique est un ciment.

3. Procédé selon la revendication 1 ou 2, **caractérisé en ce que** la composition aqueuse, accélérant le durcissement, contenant du silicate de calcium hydraté est mélangée avec l'eau de gâchage et ajoutée sous cette forme au mélange de mortier sec.

4. Procédé selon la revendication 1 ou 2, **caractérisé en ce que** la composition aqueuse, accélérant le durcissement, contenant du silicate de calcium est ajoutée séparément de l'eau de gâchage au mélange de mortier sec, de préférence via deux conduites d'alimentation séparées pour l'eau de gâchage et la composition accélérant le durcissement.

5. Procédé selon l'une quelconque des revendications 1 à 4, **caractérisé en ce que** l'organe de mélange est une pompe à mortier.

6. Procédé selon l'une quelconque des revendications 1 à 5, **caractérisé en ce que** le mélange de mortier sec contient des charges, des fluidifiants, des agents de réduction du retrait, des agents de formation de pores d'air, des antimousses et/ou des agents de rétention d'eau à base de structures de type polysaccharide, de préférence solubles dans l'eau.

7. Procédé selon l'une quelconque des revendications 1 à 6, **caractérisé en ce qu'**on n'utilise, ni un accélérateur exempt d'alcalis à base de sulfate et de sels d'aluminium, ni un accélérateur contenant des alcalis dans le procédé.

8. Procédé selon l'une quelconque des revendications 1 à 7, **caractérisé en ce que** le dosage du silicate de calcium hydraté par rapport au liant hydraulique, de préférence par rapport au ciment, est de 0,05% en poids à 5% en poids, de préférence de 0,1% en poids à 1,5% en poids, de manière particulièrement préférée de 0,2% en poids à 1% en poids.

9. Procédé selon l'une quelconque des revendications 1 à 8 pour la préparation de mortiers de réparation, de colles pour armatures, de crépis minéraux et de systèmes de chapes, de préférence de crépis minéraux, à prise hydraulique.
